Europäisches Patentamt

European Patent Office

Office européen des brevets

(11) Publication number : **0 417 828 B1**

# EUROPEAN PATENT SPECIFICATION

(45) Date of publication of patent specification :
24.11.93 Bulletin 93/47

(51) Int. Cl.⁵ : **C08L 3/08,** // (C08L3/08, 23:00, 25:06, 23:08)

(21) Application number : **90202306.8**

(22) Date of filing : **28.08.90**

(54) Composition containing a polymer of unsaturated hydrocarbon and a starch derivative.

The file contains technical information submitted after the application was filed and not included in this specification

(30) Priority : **15.09.89 NL 8902321**

(43) Date of publication of application :
**20.03.91 Bulletin 91/12**

(45) Publication of the grant of the patent :
**24.11.93 Bulletin 93/47**

(84) Designated Contracting States :
**AT BE CH DE DK ES FR GB GR IT LI LU NL SE**

(56) References cited :
**EP-A- 0 032 802
US-A- 2 458 191
US-A- 4 133 784
US-A- 4 863 655**

(73) Proprietor : **CARGILL B.V.
Lelyweg 31
NL-4612 PS Bergen op Zoom (NL)**

(72) Inventor : **Bussink, Jan, Prof. Drs.
Olympialaan 20
NL-4625 CT Bergen op Zoom (NL)**
Inventor : **German, Anton Leendert, Prof. Dr. Ir.
Ulenpas 82
NL-5655 JD Eindhoven (NL)**
Inventor : **Meijer, Henricus Eduard Hubertus,
Prof. Dr. Ir.
Kruisstraat 43
NL-5502 JA Veldhoven (NL)**
Inventor : **Delrue, Rita Maria, Ing.
Papaverstraat 35
NL-4621 HR Bergen op Zoom (NL)**
Inventor : **Zijderveld, Antonius Hendrik, Drs.
Bremstraat 14
NL-8171 XT Vaassen (NL)**

(74) Representative : **Ellowicz, Leo, Drs. et al
Octrooibureau Polak & Charlouis Laan Copes
van Cattenburch 80
NL-2585 GD Den Haag (NL)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a composition which contains a polymer consisting of units derived from unsaturated hydrocarbon monomer and a starch derivative for improving the biodegradability.

Several of such materials have been developed because polymers of unsaturated hydrocarbons, such as polyethene, polypropylene and polystyrene, possess little biodegradability. The inclusion of a biodegradable material has the advantage that when the combination is used for e.g. packaging purposes, the poorly degradable material will only form a part of the packaging, sothat in total considerably less of this material causes problems with respect to waste processing or environmental pollution. The following classes of processes have been used for incorporating starch derivatives.

A. The incorporation in an artificial resin of gelatinized or un-gelatinized starch or derivatives thereof. The starch or starch derivative functions as a filler therein. According to US-A-4,016,117 blown films of polyethylene with predried starch and small amounts of ethyl oleate and oleic acid were manufactured in this way. However, with more than about 15% of starch these films became paper-like. According to US-A-4,021,388 pretreated starch is used for this same purpose and in this way one can obtain with 8% pretreated starch a film with better properties than that according to the above mentioned patent. The patent states that one may use a maximum of 50% of starch derivative. According to US-A-4,125,495 pretreated starch is used as a filler in PVC which contains plasticisers in an amount of up to 50% and a usual stabilising agent. The content of pretreated starch is in this case 51 weight %. According to this patent the critical limit would amount to 60 weight %, at which the material becomes porous, because then the amount of polymer is not sufficient anymore to fill the interstices between the starch grains.

The abovementioned patents are in the name of Coloroll Limited and this company now produces on the basis of these inventions a polyethylene bag which contains 7-10% of starch.

Another proposal for the use of starch as a filler can be found in Ind. Eng. Chem., Prod. Res. Dev. 16 (4), 305-3-08 (1977) and 19 (4), 592-595 (1980). According to the first mentioned article a flexible film is prepared from a composition of a water-dispersible copolymer of ethylene and acrylic acid (EAA) and a starchy material. The starchy product is unmodified starch, but one may also use the amylose or amylopectin component or also modified starch products, such as partially depolymerised starches and starch derivatives. It is preferred that the starch materials have been gelatinized. The starch grains should be sufficiently swollen and broken in order to form a smooth viscous aqeous dispersion. The preferably used EAA is a water-dispersible copolymer obtained from a mixture of 20 weight% of acrylic acid and 80 weight% of ethylene. In the second article mentioned hereinabove further experiments have been disclosed with the extrusion-blowing technique, wherein the EAA could also be partially replaced with low pressure polyethylene. With air-dried corn starch (11% moisture) one obtained clear, flexible and uniform films in the case of mixtures containing 40% of starch and no more than about 40% of low pressure polyethylene.

Similar experiments have been disclosed in EP-A-0 032 802 from which it appears that neutralization of the EAA with ammonia is essential. Example 10 disloses a film made from 40% of starch, 10% of EAA and 50% of PE, said film having poor physical properties.

In this technique apparently the carboxy groups of the EAA promote the water-dispersibility of the composition, and possibly also bonding between the carboxy groups of the EAA and the hydroxy groups of the starch occurs.

No commercial use of this research has become known to the applicant.

B. Use of graft polymers of starch in artificial resins.

The principle of this method is that a free radical is formed on the backbone of the starch, whereafter reaction with a polymerizable vinylic or acrylic monomer is carried out. Initiation can take place chemically or by radiation. Several monomers have been tried using this method. Reference is made to Encycl. Polym. Sci. Technology, Suppl. nr. 2, 665-669 (1977) and Polym. Eng. Sci. 17 (5) 311-316 (1977).

According to this technique synthetic polymers can be obtained having varying glass transition temperatures (Tg). The obtained graft copolymers were extruded without the addition of thermoplastic homopolymer and in this way continuous, polysaccharide-filled plastics were obtained which were degradable. With polystyrene and methyl methacrylate hard and brittle products were obtained, and with methyl and butyl acrylate one obtained more flexible and leather-like products. In the methyl acrylate series it appeared that better results were obtained with gelatinized starch than with starch in the form of grains.

According to StÊrke, 21, 47 (1969) the acetate, propionate and butyrate esters of graft polymers of starch with ethyl acrylate and of starch with butyl acrylate are also thermoplastic materials which can easily be shaped.

In as far as is known to the applicant, one never has prepared graft copolymers of starch with ethylene or of starch with propylene.

With this grafting method it is not possible to obtain flexible film materials, such as these of polyethylene, polypropylene and polyvinylchloride. One does obtain moldable plastic material.

Furthermore, the graft copolymers of starch cannot be prepared easily sothat these products are expensive.

It is further remarked that for this purpose exclusively untreated or gelatinized starch was used. In this respect no one has thought of starch ethers.

C. In addition to the above proposels, the incorporation of another polysaccharide, i.e. pullulan, has been suggested.

Pullulan is a high polymer, wherein repeating units of maltotriose, a glucose-trimer have been bonded to each other through a Á-1,6 bond. Pullulan is a white powder which is easily soluble in water and can be recovered as a sticky substance from a culture broth of a strain of the incarplete micro-organism Pullaria.

Pullulan not only is easily water-soluble, but it is also not toxic, it is edible and even during burning does not emit noxious gas. Furthermore, it is spontaneously decomposed by micro-organisms, even if it is dumped as waste in the unmodified state. Furthermore, a thin pullulan film is impermeable to oxygen and consequently can protect pharmaceuticals or food products against oxidation. Compositions of pullulan and thermoplastic resins have been disclosed in US patents 3,976,605, 3,992,496 and 4,045,388.

The decomposition temperature of the pullulan resin is the temperature, at which the resin during gradual heating starts to give off heat as a result of oxidative decomposition and starts to show a clear weight loss. This temperature is $250\frac{1}{2}$-$260\frac{1}{2}$C.

It appears, that by etherification or esterification of pullulan products having decomposition temperatures varying from $170\frac{1}{2}$C to $300\frac{1}{2}$C may be obtained.

Pullulan per se is a promising material, but the high production costs thereof form an obstacle for its practical use, particularly for using it in cheap packaging materials.

Etherification or esterification may further improve the properties of the pullulan, but thereby the material becomes still more expensive.

It has now been found that with a simple and cheaply prepared starch derivative it is possible to obtain a composition which is degradable to a considerable degree and which in view of its price and properties is also suitable as a packaging film.

To this end the invention provides a composition containing a polymer consisting of units derived from unsaturated hydrocarbon monomer and a starch derivative for improving the biodegradability, which is characterized by the fact that this composition contains as the starch derivative a $C_{1-4}$ alkyl or hydroxyalkyl starch ether having a degree of substitution of at least 0.25, and not more than 2, and furthermore a copolymer of ethylene and vinyl acetate or acrylic acid as a ccmpatibilizing agent.

The purpose of the etherification is to decrystallize the starch grains and to disrupt the hydrogen bonds between the starch molecules, whereby the rigid structure vanishes. By using elevated temperatures and friction forces the etherified starch grains can be easily disintegrated. The disintegrated material, when combined with plasticizers, has already per se the possibility to form plastic films, and in combination with the polymer of unsaturated hydrocarbon the starch ether does not or at least not primarily function as a filler, but forms a copolymer with the hydrocarbon polymer.

As polymers of unsaturated hydrocarbons there may be mentioned in the first place polyolefins such as polyethylene (both high pressure and low pressure polyethylene) and polypropylene, as well as polystyrene and copolymers of these unsaturated hydrocarbons.

Alkyl and hydroxyalkyl ethers of starch are known compounds. Depending on the choice of the alkyl or hydroxyalkyl group and the degree of etherification the hydrophilicity of the starch derivative can be adjusted. However, all these ethers have in common that they form wholly or mainly a copolymer with the hydrocarbon polymer.

For the present purpose the degree of substitution of the etherified starch should be at least 0.25. Preferably, the degree of substitution is higher, suitably 0.4-1.0. On the other hand a too high degree of substitution is disadvantageous for the degradability and for this reason the degree of substitution is not higher than 2.

In this connection it should be mentioned that US-A-2,458,191 teaches the addition of benzyl or allyl starch to certain polymers to increase their strength and hardness. Example 4 discloses a hard mixture of 100 parts of polystyrene with 25 parts of gummy allyl starch with a substitution degree of 2.

Among the starch ethers it is now preferred to use hydroxypropyl ethers which are obtained by condensation of starch with propylene oxide. These products are already known for a number of decades. They are prepared in accordance with the general principles of the condensation of compounds having an active hydrogen, e.g. a hydroxy group, with alkylene oxides. For these reactions base or acid catalysis is possible but for starch derivatives base catalysis is preferred. As the base catalyst one can simply and cheaply use NaOH.

Of course, substitution at several hydroxy groups of the starch can occur, and also the introduced hydroxypropyl group may react further with additional molecules of propylene oxide. As is well known, in such condensation reactions with a base catalyst usually a statistic distribution is established. The hydroxypropylation of starch has been described in more detail in "Modified Starches: Properties and Ueses", Editor O.B. Wurzburg, M.S., CRC Press, Inc. Boca Raton, Florida, U.S.A., chapter 6, by J.V. Tuschhoff.

The compatibility inducing copolymer possesses units derived from an olefin as well as hydrophilic units. According to this invention copolymers of ethylene and vinyl acetate (known as EVA polymers) and copolymers of ethylene and acrylic acid (known as EAA polymers) are used, which copolymers are commercially available and cheap.

In the composition of the invention the above-discussed three components may be present in amounts which may vary strongly. Thus, the polymer of unsaturated hydrocarbon may be present in an amount of 20-80 weight%, the starch derivative in an amount of 30-70 weight% and the compatible making agent in an amount of 11-19 weight%, said percentages being based on the compostion.

Apart from the above-discussed essential components it is often advantageous, if also a lubricant or plasticizer of the carboxylic acid type for the hydrocarbon polymer is present. Examples of such compounds are stearic acid, oleic acid and di-oleic acid. If such a plasticizer is present, its amount generally is no more than 8% of the total composition. Furthermore, this amount preferably is related to the amount of compatibility inducing copolymer, the ratio between this copolymer and lubricant or plasticizer being 2:1 to 4:1. This ingredient has the function that it makes the starch derivative more hydrophobic and thus better compatible with the hydrocarbon polymer, and that it also protects the composition against discolouration.

The production of the compositions can take place simply by admixing all the components at a temperature above the melting point of the hydrocarbon polymer, and subjecting the admixture to a shaping treatment, e.g. extrusion or pressing.

## Example I

An admixture was made of 30 parts by weight of high pressure polyethylene, 50 parts by weight of a condensation product of starch and propylene oxide having a degree of substitution of 0.5, 15 parts by weight of EVA copolymer and 5 parts by weight of di-oleic acid. The admixture was heated at 180½C in an extruder and extruded to form a granulate and the granulate was further processed to translucent films. These films had sufficient strength to be used as packaging films, and due to the presence of the starch derivative they were biodegradable to a much better degree than the usual polyethylene films.

## Example II

Admixtures were prepared as in example I with low pressure polyethylene (LDPE), and lineair low pressure polyethylene (LLDPE), respectively, and with the use of EAA as compatibility inducing copolymer, and the obtained admixtures were pressed to sheets, and some physical properties were measured. The compositions of the mixtures and the results are as follows:

|  | A | B | C |
|---|---|---|---|
| LDPE | 30 | – | – |
| LLDPE | – | 30 | 50 |
| EAA | 15 | 15 | 15 |
| Stearic acid | 5 | 5 | 5 |
| Hydroxypropyl starch | 50 | 50 | 30 |
| Elongation at break % | 9 | 57 | >300 |
| Tensile strength N/mm$^2$ | 14.4 | 15 | 17.2 |
| Density kg/m$^3$ |  |  | 994 |

## Example III

Composition C of example II was processed to form a film which had the following properties:
Elongation at break % >350

| Tensile strength, N/mm$^2$ | 18.9 |
|---|---|
| Colour | Transparant, very light brown |
| General appearance | ++ |

## Example IV

A composition of 40% LLDPE, 15% EAA, 5% stearic acid and 40% hydroxy butyl starch was processed to form a film which had the following properties :

| Elongation at break, % | 330 |
|---|---|
| Tensile strength, N/mm$^2$ | 23 |
| Colour | Transparent, very light brown |
| General appearance | ++ |

## Claims

1. Composition contains a polymer consisting of units derived from unsaturated hydrocabon monomer and a starch derivative for improving the biodegradability, characterized in that the position contains as the starch derivative a $C_{1-4}$ alkyl or hydroxyalkyl ether of starch having a degree of substitution of at least 0.25 and not more than 2, and furthermore a copolymer of ethylene and vinyl acetate or acrylic acid as a compatibility inducing agent.

2. Composition according to claim 1, characterized in that the starch derivative has a degree of substitution of 0.4-1.0.

3. Composition according to claim 1 or 2, characterized in that it also contains a lubricant or plasticizer of the carboxylic acid type for the polymer.

4. Composition according to claim 1-3, characterized in that the composition contains 20-80 weight% of polymer of unsaturated hydrocarbon, 30-90 weight% of the starch derivate, 11-19 weight% of the compatibility inducing agent and 0-8 weight% of the lubricant or plasticizer.

## Patentansprüche

1. Zusammensetzung mit einem aus Einheiten, die sich von ungesättigten Kohlenwasserstoffmonomeren ableiten, bestehenden Polymeren und einem Stärkeabkömmling zur Verbesserung der biologischen Abbaubarkeit, dadurch gekennzeichnet, daß die Zusammensetzung als Stärkeabkömmling einen $C_{1-4}$-Alkyl- oder -Hydroxyalkylether von Stärke mit einem Substitutionsgrad von mindestens 0,25 und höchstens 2 sowie weiterhin ein Copolymer aus Ethylen und Vinylacetat oder Acrylsäure als Verträglichkeit einführendes Mittel enthält.

2. Zusammensetzung nach Anspruch 1, dadurch gekennzeichnet, daß der Stärkeabkömmling einen Substitutionsgrad von 0,4 - 1,0 besitzt.

3. Zusammensetzung nach Anspruch 1 oder 2, dadurch gekennzeichnet, daß sie ferner einen Schmierstoff oder Weichmacher vom Carbonsäuretyp für das Polymere enthält.

4. Zusammensetzung nach Ansprüchen 1 - 3, dadurch gekennzeichnet, daß sie 20-80 Gew.-% ungesättigtes Kohlenwasserstoffpolymer, 30-90 Gew.-% Stärkeabkommling, 11-19 Gew.-% Verträglichkeit einführendes Mittel und 0-8 Gew.-% Schmierstoff oder Weichmacher enthält.

## Revendications

1. Composition contenant un polymère constitué d'unités dérivées d'un monomère hydrocarboné insaturé et d'un dérivé d'amidon pour l'amélioration de la biodégradabilité, caractérisée en ce que la composition contient en tant que dérivé d'amidon un éther $C_{1-4}$ alkyle ou hydroxyalkyl d'amidon ayant un degré de substitution d'au moins 0,25 et pas supérieur à 2, et de plus un copolymère d'éthylène et d'acétate de vinyle ou d'acide acrylique comme agent inducteur de compatibilité.

2.  Composition selon la revendication 1, caractérisée en ce que le dérivé d'amidon présente un degré de substitution de 0,4 à 1,0.

3.  Composition selon la revendication 1 ou 2, caractérisée en ce qu'elle contient aussi un agent lubrifiant ou plastifiant du type acide carboxylique pour le polymère.

4.  Composition selon la revendication 1 à 3, caractérisée en ce que la composition contient de 20 à 80% en poids de polymère hydrocarboné insaturé, 30 à 90% en poids de dérivé d'amidon, 11 à 19% en poids d'agent inducteur de compatibilité et 0 à 8% en poids d'agent lubrifiant ou plastifiant.